Europäisches Patentamt

European Patent Office

Office européen des brevets

(11) Veröffentlichungsnummer: **0 052 773**
**B1**

(12) **EUROPÄISCHE PATENTSCHRIFT**

(45) Veröffentlichungstag der Patentschrift:
**02.05.85**

(51) Int. Cl.⁴: **F 25 B 39/02**, F 25 B 41/00,
B 01 D 1/30, F 28 F 27/02

(21) Anmeldenummer: **81108787.3**

(22) Anmeldetag: **23.10.81**

(54) **Verteilervorrichtung.**

(30) Priorität: **21.11.80 DE 3043900**

(43) Veröffentlichungstag der Anmeldung:
**02.06.82 Patentblatt 82/22**

(45) Bekanntmachung des Hinweises auf die Patenterteilung:
**02.05.85 Patentblatt 85/18**

(84) Benannte Vertragsstaaten:
**AT BE CH FR GB IT LI SE**

(56) Entgegenhaltungen:
**DE - A - 2 731 279**
**US - A - 220 595**
**US - A - 2 063 380**
**US - A - 2 193 696**
**US - A - 2 196 858**
**US - A - 2 220 595**

(73) Patentinhaber: **R. & G. Schmöle Metallwerke GmbH & Co. KG, Fröndenberger Strasse 29, D-5750 Menden 1 (DE)**

(72) Erfinder: **Mayr, Karl-Heinz, Berkenhofskamp 11, D-5750 Menden 2 (DE)**
Erfinder: **Behm, Ernst, Dipl.-Ing., Harzstrasse 9, D-5750 Menden 1 (DE)**

(74) Vertreter: **Patentanwälte Dipl.-Ing. Alex Stenger Dipl.-Ing. Wolfram Watzke Dipl.-Ing. Heinz J. Ring, Kaiser-Friedrich-Ring 70, D-4000 Düsseldorf 11 (DE)**

## Beschreibung

Die Erfindung betrifft eine Verteilervorrichtung gemäss dem Oberbegriff von Patentanspruch 1.

Eine solche Verteilervorrichtung ist aus der US-PS 2 220 595 bekannt. Die Aufgabe dieser bekannten Verteilervorrichtung besteht darin, alle Verdampferrohre mit gleichen Anteilen an Kältemitteln zu beaufschlagen. Zur Lösung dieses Problems wird dort das Ende jedes Verdampferrohres als koaxiales Rohr ausgeführt, bei dem die Aussenrohre von ihrem freien Ende her bis auf ein einheitliches Niveau seitlich aufgeschlitzt sind, so dass ein oberhalb des Flüssigkeitsniveaus in dem Verteilergehäuse anstehender Kältemitteldampf durch die verbleibende freie Schlitzfläche zwischen dem Aussen- und dem Innenrohr eintreten kann. Flüssiges Kältemittel kann ausschliesslich am unteren Ende des Innenrohres in dieses eintreten und vermischt sich mit dem durch die Schlitze tretenden Dampf erst oberhalb des Dampfeintrittsniveaus. Der Öffnungsquerschnitt der Schlitze hängt vom Flüssigkeitsstand im Verteilergehäuse ab und hat die Wirkung einer Messblende für dampfförmiges Kältemittel. Diese bekannte Verteilervorrichtung ist relativ aufwendig konstruiert und funktioniert nur in Verbindung mit dem Innenrohr. Sie hat den Nachteil, dass sie einen relativ grossen Flüssigkeitsstandsunterschied zum Aufbau eines Drukkes zum Transport des flüssigen Kältemittels durch das Innenrohr benötigt; hierdurch entsteht ein ungünstiges pulsierendes Regelverhalten. Ausserdem müssen die Schlitzabmessungen, wie auch die Abmessungen des Ringraumes zwischen dem Innen- und dem Aussenrohr sowie des Innenrohres selbst, eng auf die Leistungsgrösse des angeschlossenen Verdampfers und des Regelungsbereiches der gesamten Anlage abgestimmt werden, was nur durch langwierige Versuche bestimmt werden kann. Eine ähnliche Verteilervorrichtung, bei der im oberen Teil der einzelnen Verdampferrohrenden die Eintrittsöffnungen vorgesehen sind, ist aus der US-PS 2 196 858 bekannt; hier treten demzufolge etwa die gleichen Probleme wie vorerwähnt auf.

Aus der DE-OS 2 731 279 ist eine Vorrichtung zur Aufteilung eines strömenden Gas-Flüssigkeits-Gemisches in mehrere Teilströme bekannt, bei der das Einspritzrohr für das Gemisch im Bereich einer sich im Verteilergehäuse einstellenden Flüssigkeitssäule liegt. Für die Abführung von Gas-Teilströmen aus einem Gasraum des Verteilergehäuses sind durch die Bodenwand sich erstreckende und im Bereich der Deckenwandung des Gehäuses mündende Rohre vorgesehen, in denen innerhalb des Verteilergehäuses und in der Nähe der Bodenwand wenigstens eine Bohrung angebracht ist, durch die ein Flüssigkeits-Teilstrom in das einen Gas-Teilstrom führende Rohr fliesst und mit diesem gemischt wird. Bei dieser bekannten Vorrichtung bewirkt eine durch das Schliessen und Öffnen eines vorgeschalteten Expansionsventiles bedingte Niveauänderung des flüssigen Kältemittels im Verteilergehäuse eine Leistungsregelung des Verdampfers. Durch diese zwangsläufigen Niveauänderungen entstehen gleichzeitig Zeitverzögerungen, die sich nachteilig auf die Regelcharakteristik zwischen dem Expansionsventil und dem Verdampfer auswirken.

Schliesslich ist es aus der US-PS 2 193 696 bekannt, in ein, ein Verteilergehäuse bildenden, geschlossenen Topf, nach oben offene Verdampferferrohre von unten her einzuführen und am Boden beginnende Schrägschlitze oder Parallelschlitze an den Verdampferrohrenden vorzusehen, wobei es wichtig ist, dass das Kältemittelzulaufrohr von unten kommend auf dem unteren Niveau der Schlitze im Verteilergehäuse mit einer Mündungsöffnung endet. Diese bekannte Verteilervorrichtung entspricht also in ihrem Grundkonzept der bereits erwähnten DE-OS 2 731 279 und weist daher zwingend die gleichen Nachteile auf. Gemäss der US-PS 2 193 696 kann nämlich das flüssige Kältemittel ungehindert durch die Verteilerrohre in den Verdampfer fliessen. Dadurch besteht die Gefahr des örtlichen Vereisens des Verdampfers und beim Wiederanschalten der Kälteanlage die Gefahr von Kältemittelschlägen im Kompressor. Durch dieses Fliessen des flüssigen Kältemittels ist die Einhaltung einer konstanten Überhitzung nicht möglich und wird ein schlechtes, übersteuertes Regelverhalten hervorgerufen, welches sich erst mit einiger Zeitverzögerung auf den Sollwert einstellt. Zwar sollen die Abschrägungen bzw. die Einlassschlitze gleiches Zufliessen ermöglichen, jedoch ist zu erwarten, dass das Kältemittelgas ungleich in Blasen von der Flüssigkeit mitgerissen wird, mit der Folge einer ungleichmässigen Verteilung. Weiterhin ist zu erwarten, dass mit dem steigenden Flüssigkeitsstand wegen des grösser werdenden Einlaufquerschnittes der Abschrägungen vermehrt Flüssigkeit abfliesst und der Gasanteil sich verringert. Ausserdem tritt das Dampf-Flüssigkeits-Gemisch von unten unter Blasenbildung in den Verteiler ein und trennt sich deshalb nur unzureichend. Es ist deshalb erforderlich, zur Erreichung der gleichmässigen Verteilung eine zentrische, gleichmässige Anordnung der Verdampferrohre und der Schrägen zum Einlaufrohr vorzusehen. Die Fertigung der Vorrichtung ist daher sehr aufwendig.

Davon ausgehend liegt der Erfindung die Aufgabe zugrunde, die Verteilervorrichtung für das aus einem Gas-Flüssigkeits-Gemisch bestehende Kältemittel, z.B. zur Verwendung in einer Wärmepumpe, so auszubilden, dass unabhängig von der Art des Kältemittels, vom Kältemitteldurchsatz und unterschiedlichen Betriebsbedingungen keine zeitverzögernde Regelung zwischen Expansionsventil und Verdampfer eintritt und eine Verteilung des Gemisches in mehrere gleich grosse Teilströme erreicht wird.

Zur technischen Lösung dieser Aufgabe werden bei einer Verteilervorrichtung der gattungsgemässen Art die kennzeichnenden Merkmale des Patentanspruchs 1 vorgeschlagen.

Bei einer praktischen Ausführungsform sollte der Abstand der Öffnungen der Verdampferrohre vom Boden des Verteilergehäuses 20 bis 45 mm betragen. Weiterhin hat es sich als zweckmässig erwiesen, die Enden der Verdampferrohre unter einem Winkel von 30 bis 45° abzuschneiden. Ferner sollten die offenen Enden der Verdampferrohre zusammengeführt und von innen nach aussen verlaufend schräg abgeschnitten sein. Schliesslich hat es sich als zweckmässig erwiesen, den Abstand des Einspritzrohres vom Boden des Verteilergehäuses wenigstens doppelt so gross zu wählen, wie den Abstand der Verdampferrohre vom Boden, damit sich das eingespritzte Gas-Flüssigkeits-Gemisch des Kältemittels zunächst entmischen und dann wieder in mehrere gleich grosse Teilströme aufteilen kann.

Eine erfindungsgemäss ausgebildete Verteilervorrichtung hat den Vorteil, dass alle Verdampferrohre mit gleichen Anteilen an dampfförmigem und flüssigem Kältemittel beaufschlagt werden, und zwar unabhängig von der Kältemittelart, den Betriebsbedingungen und dem Kältemitteldurchsatz. Ferner stellen sich keine Zeitverschiebungen im Regelverhalten ein, weil eine kontinuierliche und stufenlose Kältemittelzuführung in die Verdampferrohre gewährleistet ist. Ein weiterer Vorteil besteht darin, dass nach Abschalten des Wärmepumpensystems kein flüssiges Kältemittel mehr in den Verdampfer läuft und zu unerwünschten Kältemittelschlägen im Kompressor führen kann. Schliesslich wird durch eine erfindungsgemäss ausgebildete Verteilervorrichtung auch noch sichergestellt, dass nach dem Schliessen des Expansionsventiles kein flüssiges Kältemittel mehr aus dem Verteiler in den Verdampfer nachläuft. Dadurch kann eine konstante Überhitzung am Ende des Verdampfers eingehalten werden, so dass während des Betriebes der Kompressor kein flüssiges Kältemittel ansaugt.

Weitere Einzelheiten und Vorteile des Gegenstandes der Erfindung ergeben sich aus der nachfolgenden Beschreibung der zugehörigen Zeichnungen, in denen eine bevorzugte Ausführungsform einer erfindungsgemäss ausgebildeten Verteilervorrichtung schematisch dargestellt ist. In den Zeichnungen zeigen:

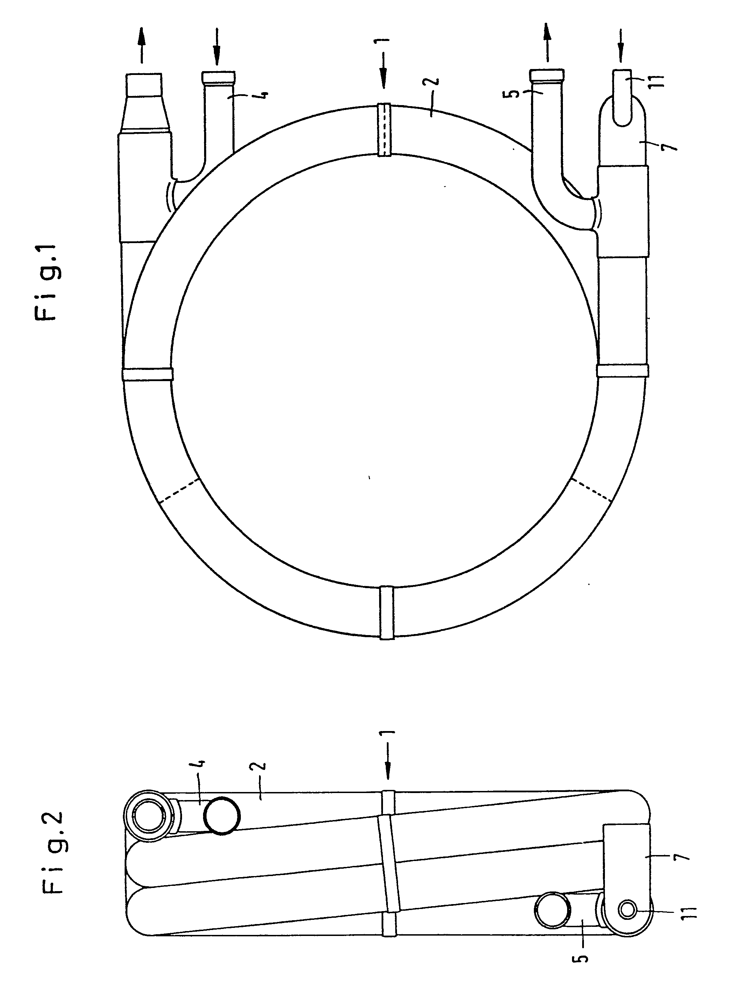

Fig. 1 einen Koaxialverdampfer in Draufsicht;
Fig. 2 denselben Koaxialverdampfer in Seitenansicht;
Fig. 3 eine Verteilervorrichtung des Koaxialverdampfers in vergrösserter Darstellung und im Längsschnitt;
Fig. 4 den Koaxialverdampfer entlang der Linie IV–IV in Fig. 3 geschnitten.

Der dargestellte Koaxialverdampfer 1 besteht aus einem schraubenlinienförmig gewendelten Mantelrohr 2 mit innenliegenden Verdampferrohren 3a. Der freie Raum zwischen dem Mantelrohr 2 und den Verdampferrohren 3a wird von einem Wärmetauschermedium, beispielsweise Wasser, durchströmt, welches über einen Einlassstutzen 4 eingeleitet, über einen Auslassstutzen 5 herausgeleitet und im Gegenstrom zu einem Kältemittel 6 in den Verdampferrohren 3a geführt wird.

Vor dem Einlaufende des Koaxialverdampfers 1 ist ein nach unten umgebogenes Verteilergehäuse 7 angeordnet, welches einen geschlossenen Topf bildet und in dem dargestellten Ausführungsbeispiel aus einem Rohrkrümmer 8 mit einer druckdicht eingesetzten Bodenkappe 9 besteht. Die einzelnen Verdampferrohre 3a im Mantelrohr 2 sind durch gebogene Verdampferrohre 3b verlängert, die mit vorgegebenen Biegeradien in den unteren Raum des Verteilergehäuses 7 hineingeführt sind und im Abstand a, der vorzugsweise 20 bis 45 mm beträgt, über der Bodenkappe 9 enden. Die Verteilerrohre 3b sind gebündelt und ihre Enden 10 unter einem Winkel $\alpha$, der vorzugsweise 30 bis 45° beträgt, von innen nach aussen ansteigend schräg abgeschnitten.

Im Abstand b ist über der Bodenkappe 9 des Rohrkrümmers 8 ein Einspritzrohr 11 in das Verteilergehäuse 7 eingesetzt. Die Längsachse des Einspritzrohres 11 fluchtet etwa mit der Längsachse des Mantelrohres 2. Der Abstand b beträgt deshalb wenigstens das Doppelte des Abstandes a.

Das Verteilergehäuse 7 ist zum Mantelrohr 2 hin mit einer durchbohrten Scheibe 13 abgedichtet, in der die Verdampferrohre 3a fixiert sind.

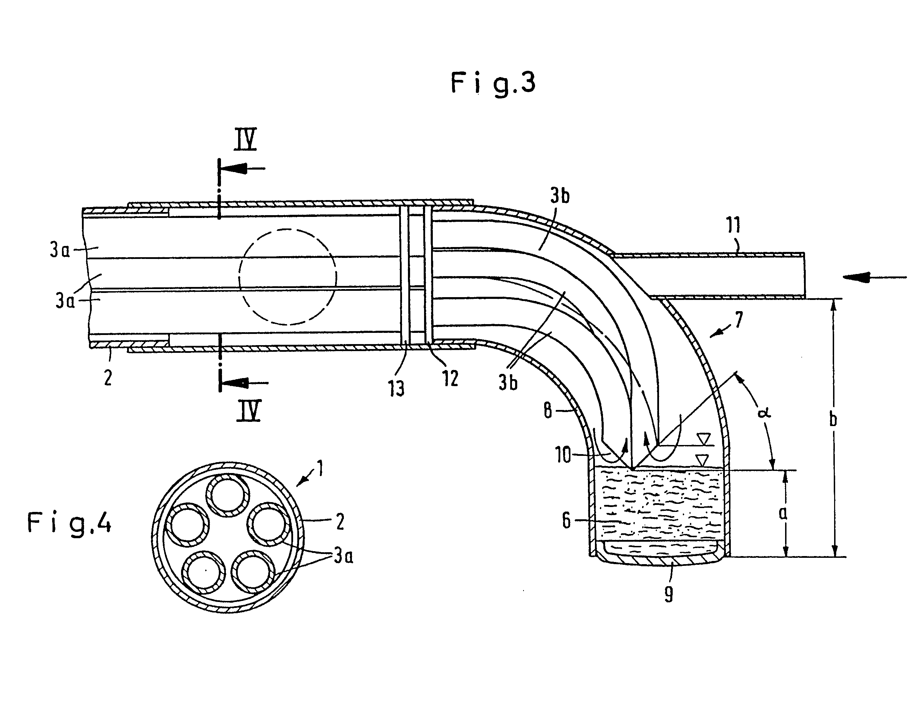

Fig. 3 zeigt eine praktische Ausführung, bei der die Verteilerrohre 3b vorgefertigt und in einer Distanzscheibe 12 fixiert sind. Durch das aufgesetzte Verteilergehäuse 7 dichtet die Distanzscheibe 12 auch zum Mantelrohr 2 hin ab. Das Gas-Flüssigkeits-Gemisch des Kältemittels 6 wird durch das Einspritzrohr 11 in das Verteilergehäuse 7 eingeleitet, in dem sich aus der flüssigen Phase aufgrund des höheren spezifischen Gewichtes ein Sumpf bildet. Über dem Sumpf steht die gasförmige Phase des Kältemittels an. Während des Betriebes pendelt sich der Flüssigkeitsspiegel des Sumpfes zwischen dem unteren und dem oberen Ende der abgeschrägten Enden 10 der Verdampferrohre 3b ein. Dabei erfolgt eine gleichmässige Verteilung der gasförmigen Phase und der flüssigen Phase des Gemisches in gleiche Teilströme auf die verschiedenen Verdampferrohre 3a und 3b.

Bezugszeichenliste
1   Koaxialverdampfer
2   Mantelrohr
3a  Verdampferrohr
3b  Verdampferrohr
4   Einlassstutzen
5   Auslassstutzen
6   Kältemittel
7   Verteilergehäuse
8   Rohrkrümmer
9   Bodenkappe
10  Ende
11  Einspritzrohr
12  Distanzhalter
13  Scheibe

a   Abstand

b   Abstand
α   Winkel

## Patentansprüche

1. Verteilervorrichtung für ein aus einem Gas-Flüssigkeits-Gemisch bestehendes, den Verdampferrohren eines Mehrrohrverdampfers zuzuführendes Kältemittel mit einem einen geschlossenen Topf bildenden Verteilergehäuse, in das die Verdampferrohre mit nach unten zeigenden offenen, im Abstand über dessen Boden auf der gleichen Höhe endenden, sich etwa vertikal erstreckenden Enden und ein im Abstand über den Enden der Verdampferrohre in dem Verteilergehäuse endendes Kältemittel-Einspritzrohr münden, dadurch gekennzeichnet, dass die Enden (10) gleichmässig schräg abgeschnitten sind und als die Eintrittsöffnung zum gleichzeitigen Eintritt der gasförmigen und flüssigen Phase in das jeweilige Verdampferrohr dienen, wobei die Grenzfläche zwischen der flüssigen und der gasförmigen Phase während des Betriebes zwischen dem unteren und dem oberen Ende der Abschrägungen liegt.

2. Verteilervorrichtung nach Anspruch 1, dadurch gekennzeichnet, dass der Abstand a der Enden (10) der Verdampferrohre (3b) vom Boden (Bodenkappe 9) des Verteilergehäuses (7) 20 bis 45 mm beträgt.

3. Verteilervorrichtung nach Anspruch 2, dadurch gekennzeichnet, dass die Enden (10) der Verdampferrohre (3b) unter einem Winkel von 30 bis 45° abgeschnitten sind.

4. Verteilervorrichtung nach Anspruch 3, dadurch gekennzeichnet, dass die Enden (10) der Verdampferrohre (3b) zusammengeführt und derart schräg abgeschnitten sind, dass die Abschrägung von innen nach aussen ansteigend verläuft.

5. Verteilervorrichtung nach Anspruch 1, dadurch gekennzeichnet, dass der Abstand des Einspritzrohres (11) vom Boden (Bodenkappe 9) des Verteilergehäuses (7) wenigstens doppelt so gross ist wie der Abstand (a) der Verdampferrohre (3b) vom Boden.

6. Verteilervorrichtung nach Anspruch 5, dadurch gekennzeichnet, dass die Längsachse des Einspritzrohres (11) mit der Längsachse des Koaxialverdampfers (1) fluchtet.

## Claims

1. A distributor arrangement for a coolant consisting of a gas-liquid mixture, to be supplied to the evaporation tubes of a multi-tube evaporator with a distributor casing forming a closed container into which the evaporation tubes open out downwardly, terminating at a distance above its bottom at the same height, and with their ends extending substantially vertically, and a coolant injection tube terminating at a distance above the ends of the evaporator tubes in the distributor housing, characterised in that, the ends (10) are evenly cut off slantwise and act as the inlet opening for the simultaneous inflow of the gaseous and liquid phase into the appropriate evaporation tube, wherein the interface between the liquid and the gaseous phase lies, during operation, between the lower and the upper end of the slantings.

2. A distributor arrangement according to claim 1, characterised in that the distance a of the ends (10) of the evaporator tubes (3b) from the bottom (bottom cup 9) of the distributor casing (7) is 20 to 45 mm.

3. A distributor arrangement according to claim 2, characterised in that the ends (10) of the evaporator tubes (3b) are cut off at an angle of 30 to 45°.

4. A distributor arrangement according to claim 3, characterised in that the ends (10) of the evaporator tubes (3b) are led together and are cut off slantwise in such a manner that the slanting increases as it runs from inside outwards.

5. A distributor arrangement according to claim 1, characterised in that the distance of the injection tube (11) from the bottom (bottom cup 9) of the distributor casing is at least twice as great as the distance of the evaporator tubes (3b) from the bottom.

6. A distributor arrangement according to claim 5, characterised in that the longitudinal axis of the injection tube (11) is in alignment with the longitudinal axis of the coaxial evaporator (1).

## Revendications

1. Dispositif de distribution pour un agent réfrigérant constitué d'un mélange gaz-liquide et qui doit être amené aux tubes d'évaporation d'un évaporateur à plusieurs tubes, avec un boîtier de distribution formant un pot fermé et dans lequel débouchent les tubes d'évaporation par des extrémités ouvertes vers le bas, se terminant à la même hauteur à distance au-dessus du fond dudit boîtier et s'étendant sensiblement verticalement et un tube d'injection d'agent réfrigérant se terminant à distance au-dessus des extrémités des tubes d'évaporation dans le boîtier de distribution, caractérisé en ce que les extrémités (10) sont découpées obliquement de manière uniforme et servent d'ouverture d'entrée pour l'introduction simultanée de la phase gazeuse et de la phase liquide dans le tube évaporateur concerné, la surface de séparation entre la phase liquide et la phase gazeuse se trouvant, pendant le fonctionnement, entre l'extrémité inférieure et l'extrémité supérieure des biseaux.

2. Dispositif de distribution selon la revendication 1, caractérisé en ce que la distance (a) des extrémités (10) des tubes d'évaporation (3b) à partir du sol (fond de cuvette 9) du boîtier de distribution (7) est de 20 à 45 mm.

3. Dispositif de distribution selon la revendication 2, caractérisé en ce que les extrémités (10) des tubes évaporateurs (3b) sont découpés selon un angle de 30 à 45°.

4. Dispositif de distribution selon la revendication 3, caractérisé en ce que les extrémités (10) des tubes d'évaporation (3b) sont en faisceau et sont découpées en oblique de telle manière que le biseau s'étend en montant de l'intérieur vers l'extérieur.

5. Dispositif de distribution selon la revendication 1, caractérisé en ce que la distance (b) du tube d'injection (11) à partir du sol (fond de cuvette 9) du boîtier de distribution (7) est au moins le double de la distance (a) des tubes d'évaporation (3b) à partir du sol.

6. Dispositif de distribution selon la revendication 5, caractérisé en ce que l'axe longitudinal du tube d'injection (11) est en alignement avec l'axe longitudinal de l'évaporateur coaxial (1).

Fig.2

Fig.1

0 052 773

# Fig.3

# Fig.4